# EUROPEAN PATENT APPLICATION

(11) **EP 3 142 281 A1**
(43) Date of publication of application: **15.03.2017**
(21) Application number: 16187933.3
(22) Date of filing: 08.09.2016
(51) Int. Cl.: H04L 1/00

(54) **WIRELESS LOCAL AREA NETWORK DATA FRAME TRANSMISSION METHOD AND APPARATUS**

(30) Priority: 11.09.2015 CN 201510579474
(71) Applicant: Huawei Technologies Co., Ltd., Longgang District Shenzhen, Guangdong 518129 (CN)
(72) Inventor: HUANG, Yuping, Shenzhen, Guangdong 518129 (CN); BAI, Xiaofei, Shenzhen, Guangdong 518129 (CN); RUAN, Wei, Shenzhen, Guangdong 518129 (CN)
(74) Representative: Pfenning, Meinig & Partner mbB

(57) **Abstract**

Embodiments of the present invention disclose a wireless local area network data frame transmission method and apparatus. The wireless local area network data frame transmission method includes: determining a current transmission rate of a data frame as a first transmission rate; when a size of the data frame is less than a preset threshold, adjusting the current transmission rate of the data frame to a second transmission rate, where the second transmission rate is less than the first transmission rate; and transmitting the data frame at the second transmission rate. By means of the embodiments of the present invention, noises existing in a voice obtained by means of decoding by a receiving party can be avoided in a manner of reducing a voice data frame transmission rate.

## Description

### TECHNICAL FIELD

The present invention relates to the field of communications technologies, and in particular, to a wireless local area network data frame transmission method and apparatus.

### BACKGROUND

In a wireless local area network (English: wireless local area network, WLAN), a data frame can be transmitted between WLAN terminals. A size of a voice data frame is small, and there are a small quantity of voice data frames transmitted within preset duration. Therefore, a WLAN terminal cannot aggregate multiple voice data frames into a large data frame. A factor such as interference may cause a transmission failure of a data frame, and in this case, the WLAN terminal re-transmits the data frame. If data frames sent by the WLAN terminal are voice data frames, a high ratio of re-transmission of the voice data frames causes voice data frames received by a receiving party to be out-of-order, consequently noises exist in a voice obtained by means of decoding.

### SUMMARY

This application provides a wireless local area network data frame transmission method and apparatus, which can avoid, in a manner of reducing a voice data frame transmission rate, noises existing in a voice obtained by means of decoding by a receiving party.

According to a first aspect, a wireless local area network data frame transmission method is provided, including:
determining a current transmission rate of a data frame as a first transmission rate;
when a size of the data frame is less than a preset threshold, adjusting the current transmission rate of the data frame to a second transmission rate, where the second transmission rate is less than the first transmission rate; and
transmitting the data frame at the second transmission rate.

In a first possible implementation manner,
the adjusting the current transmission rate of the data frame to a second transmission rate includes:
using a transmission rate in a transmission rate set as the second transmission rate, where
each transmission rate in the transmission rate set is less than the first transmission rate.

With reference to the first possible implementation manner of the first aspect, in a second possible implementation manner, the using a transmission rate in a transmission rate set as the second transmission rate includes:
acquiring a priority of each transmission rate in the transmission rate set; and
using a transmission rate with a highest priority in the transmission rate set as the second transmission rate.

With reference to the first aspect, in a third possible implementation manner, the determining a current transmission rate of a data frame as a first transmission rate includes:
searching for the current transmission rate of the data frame by using an MCS; and
using the current transmission rate that is obtained by means of searching as the first transmission rate.

According to a second aspect, a wireless local area network data frame transmission apparatus is provided, including:
a determining module, configured to determine a current transmission rate of a data frame as a first transmission rate;
an adjustment module, configured to: when a size of the data frame is less than a preset threshold, adjust the current transmission rate of the data frame to a second transmission rate, where the second transmission rate is less than the first transmission rate; and a transmission module, configured to transmit the data frame at the second transmission rate.

In a first possible implementation manner, the adjustment module is specifically configured to:
use a transmission rate in a transmission rate set as the second transmission rate, where
each transmission rate in the transmission rate set is less than the first transmission rate.

With reference to the first possible implementation manner of the second aspect, in a second possible implementation manner, the adjustment module uses a transmission rate in the transmission rate set as the second transmission rate, and is specifically configured to:
acquire a priority of each transmission rate in the transmission rate set; and
use a transmission rate with a highest priority in the transmission rate set as the second transmission rate.

With reference to the possible implementation manner of the second aspect, in a third possible implementation manner, the determining module is specifically configured to:
search for the current transmission rate of the data frame by using an MCS; and
use the current transmission rate that is obtained by means of searching as the first transmission rate.

According to this application, a current transmission rate of a data frame is determined as a first transmission rate; when a size of the data frame is less than a preset threshold, the current transmission rate of the data frame is adjusted to a second transmission rate, where the second transmission rate is less than the first transmission rate; and the data frame is transmitted at the second transmission rate. In this way, noises existing in a voice obtained by means of decoding by a receiving part can be avoided in a manner of reducing a voice data frame transmission rate.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a wireless local area network data frame transmission method according to an embodiment of the present invention;
FIG. 2 is a schematic structural diagram of a data frame according to an embodiment of the present invention;
FIG. 3 is a schematic structural diagram of a wireless local area network data frame transmission apparatus according to an embodiment of the present invention; and
FIG. 4 is a schematic structural diagram of a terminal device according to an embodiment of the present invention.

### DESCRIPTION OF EMBODIMENTS

The following clearly describes the technical solutions in the embodiments of the present invention with reference to the accompanying drawings in the embodiments of the present invention.

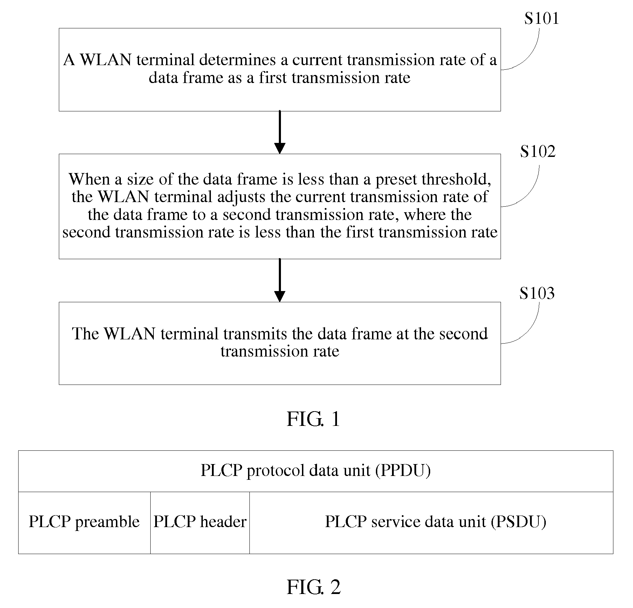

Referring to FIG. 1, FIG. 1 is a schematic flowchart of a wireless local area network data frame transmission method according to an embodiment of the present invention. As shown in the figure, the wireless local area network data frame transmission method in this embodiment of the present invention may include at least the following steps:
S101. A WLAN terminal determines a current transmission rate of a data frame as a first transmission rate.

The WLAN terminal may be any device with a WLAN station (English: station, STA) function, which may be a wireless access point (English: access point, AP) or may be a non-AP station (English: non-AP station), such as a cellphone (English: cellphone), a smartphone (English: smartphone), a computer (English: computer), a tablet computer (English: tablet computer), a personal digital assistant (English: personal digital assistant, PDA), a mobile Internet device (English: mobile Internet device, MID), a wearable device, or an e-book reader (English: e-book reader).

The WLAN terminal may determine the current transmission rate of the data frame as the first transmission rate. The current transmission rate of the data frame may be a preset standard transmission rate. For example, the WLAN terminal may search for the current transmission rate of the data frame by using a modulation and coding scheme (English: modulation and coding scheme, MCS), and determine the current transmission rate that is obtained by means of searching as the first transmission rate.

Exemplarily, the data frame may be a physical layer convergence procedure service data unit (English: physical layer convergence procedure (PLCP) service data unit, PSDU). For example, a schematic structural diagram of a data frame shown in FIG. 2 is used as an example. A PLCP protocol data unit (English: PLCP protocol data unit, PPDU) may include the following parts: a PLCP preamble (English: preamble), a PLCP header (English: PLCP header), and a PSDU. The PLCP preamble is used to enable a physical layer chip to implement steady-state demodulation, synchronization of bit clock, and frame start. The PLCP header includes a field that is used to indicate a rate of the frame. The PSDU includes a medium access control protocol data unit (English: medium access control (MAC) protocol data unit, MPDU) or an aggregate MPDU (A-MPDU).
frame start
S102. When a size of the data frame is less than a preset threshold, the WLAN terminal adjusts the current transmission rate of the data frame to a second transmission rate, where the second transmission rate is less than the first transmission rate.

The WLAN terminal may determine whether the size of the data frame is less than the preset threshold; and when the size of the data frame is less than the preset threshold, adjust the current transmission rate of the data frame to the second transmission rate, where the second transmission rate is less than the first transmission rate. When the size of the data frame is greater than or equal to the preset threshold, the WLAN terminal may transmit the data frame at the first transmission rate.

For example, the second transmission rate may be a preset rate value. The rate value may be a fixed value or an empirical value. A current transmission rate of a wireless local area network data frame may be: 54 MB/s, 48 MB/s, 36 MB/, 33 MB/s, 24 MB/s, 22 MB/s, 18 MB/s, 12 MB/s, 11 MB/s, 9 MB/s, 6 MB/s, 5.5 MB/s, 2 MB/s, or 1 MB/s. The second transmission rate may be a preset fixed value, for example, 1 MB/s. When the size of the data frame is less than the preset threshold, the WLAN terminal adjusts the current transmission rate of the data frame to 1 MB/s. If the second transmission rate is an empirical value, the empirical value may be obtained according to historical statistics on data frames that are transmitted by the WLAN terminal. For example, according to statistics, it may be learned that, in a process in which the WLAN terminal transmits other data frames, a probability of sending the data frames successfully at a rate R is relatively high, and the second transmission rate is set to the rate R. When the size of the data frame is less than the preset threshold, the WLAN terminal adjusts the current transmission rate of the data frame to the rate R. In this embodiment of the present invention, a lower second transmission rate at which a data frame is transmitted indicates a higher probability of sending the data frame successfully by the WLAN terminal and a stronger anti-interference capability.

Alternatively, the WLAN terminal may determine a transmission rate set, where each transmission rate in the transmission rate set is less than the first transmission rate, and use a transmission rate in the transmission rate set as the second transmission rate. For example, the transmission rate set may be determined by using a signal-to-noise ratio and the first transmission rate. The WLAN terminal first determines a candidate-rate set, and then uses a set in which a transmission rate in the candidate-rate set is less than the first transmission rate as the transmission rate set. The WLAN terminal may use a transmission rate in the transmission rate set as the second transmission rate. When a current signal-to-noise ratio is relatively large, a quantity of transmission rates included in a candidate-rate set is also relatively large. Exemplarily, when the current signal-to-noise ratio is greater than a preset signal-to-noise ratio threshold, transmission rates included in a candidate-rate set determined by the WLAN terminal may be: 12 MB/s, 11 MB/s, 9 MB/s, 6 MB/s, 5.5 MB/s, 2 MB/s, 1 MB/s, and the like. When the current signal-to-noise ratio is less than or equal to a preset signal-to-noise ratio threshold, transmission rates included in a candidate-rate set determined by the WLAN terminal may be: 6 MB/s, 5.5 MB/s, 2 MB/s, and 1 MB/s.

In an optional embodiment, the WLAN terminal may acquire a priority of each transmission rate in the transmission rate set, and use a transmission rate with a highest priority in the transmission rate set as the second transmission rate.

For example, the WLAN terminal determines that a higher transmission rate in the transmission rate set has a higher priority. Exemplarily, transmission rates included in the transmission rate set are: 6 MB/s, 5.5 MB/s, 2 MB/s, and 1 MB/s, and the WLAN terminal may acquire that a transmission rate 1 (that is, 6 MB/s) has a highest priority, a priority of a transmission rate 2 (5.5 MB/s) is lower than that of the transmission rate 1, a priority of a transmission rate 3 (2 MB/s) is lower than that of the transmission rate 2, and a priority of a transmission rate 4 (1 MB/s) is lower than that of the transmission rate 3. Therefore, the WLAN terminal may use the transmission rate 1 as the second transmission rate.

For another example, the WLAN terminal may sort the transmission rates in the transmission rate set in descending order, determine that a transmission rate ranked second has a highest priority, and then use the transmission rate ranked second in the transmission rate set as the second transmission rate. This embodiment of the present invention includes but is not limited to determining that the transmission rate ranked second has a highest priority. For example, the WLAN terminal may determine that a transmission rate ranked third has a highest priority, and use the transmission rate ranked third in the transmission rate set as the second transmission rate.

In this embodiment of the present invention, the data frame may be a voice data frame that needs to be transmitted by the WLAN terminal. The WLAN terminal cannot identify whether a data frame is a voice data frame. However, a size of a conventional voice data frame is generally small. For example, if a size of a data frame is less than a preset threshold, the WLAN terminal may transmit, at a low rate, the data frame whose size is less than the preset threshold. Because the data frame whose size is less than the preset threshold may be a voice data frame, a transmission success ratio of voice data frames can be improved if all data frames whose sizes are less than the preset threshold are transmitted at a low rate.

The preset threshold may be a size threshold, for example, 128 bytes (English: byte) or 256 bytes. For example, when the preset threshold is 128 bytes and a size of a to-be-transmitted data frame is 100 bytes, that the size of the data frame is less than the preset threshold can be determined, and further, a current transmission rate of the data frame is adjusted to a second transmission rate.

S103. The WLAN terminal transmits the data frame at the second transmission rate.

The WLAN terminal may transmit the data frame at the second transmission rate. In specific implementation, the WLAN terminal may send the data frame to a receiving party at the second transmission rate. When the WLAN terminal identifies that the data frame is a voice data frame, a probability of disorder caused between voice data frames that are received by the receiving party is relatively low. In this way, noises existing in a voice acquired by decoding the voice data frame can be avoided.

Whether to use the second transmission rate or the first transmission rate for transmission is determined independently for each data frame. That is, the WLAN terminal changes the current transmission rate temporarily. When the size of the data frame is less than the preset threshold, the WLAN terminal temporarily adjusts the current transmission rate of the data frame to the second transmission rate. If a size of a next data frame is greater than or equal to the preset threshold, the WLAN terminal transmits the next data frame at the first transmission rate. For example, after transmitting the data frame at the second transmission rate, the WLAN terminal may adjust the current transmission rate back to the first transmission rate, so as to help the WLAN terminal determine a current transmission rate of the next data frame as the first transmission rate. When a size of a next data frame is less than the preset threshold, a current transmission rate of the next data frame is adjusted.

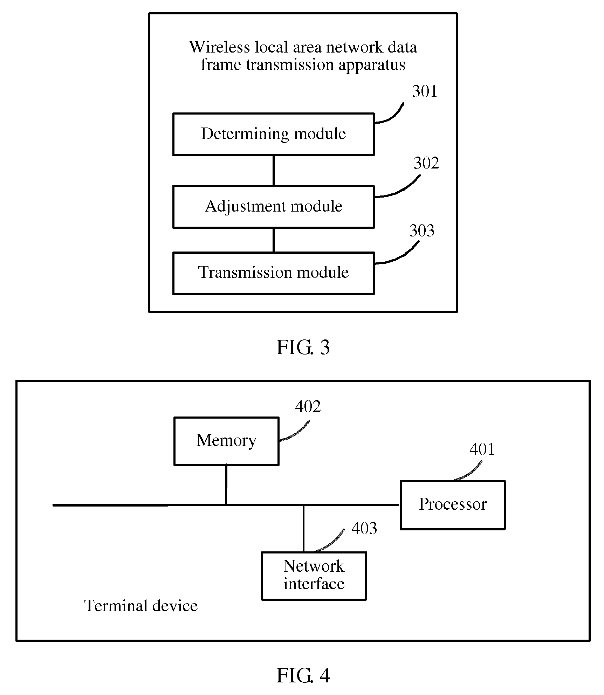

According to the wireless local area network data frame transmission method shown in FIG. 1, a current transmission rate of a data frame is determined as a first transmission rate; when a size of the data frame is less than a preset threshold, the current transmission rate of the data frame is adjusted to a second transmission rate, where the second transmission rate is less than the first transmission rate; and the data frame is transmitted at the second transmission rate. In this way, noises existing in a voice obtained by means of decoding by a receiving party can be avoided. Referring to FIG. 3, FIG. 3 is a schematic structural diagram of a wireless local area network data frame transmission apparatus according to an embodiment of the present invention. The wireless local area network data frame transmission apparatus provided in this embodiment of the present invention is corresponding to the method shown in FIG. 1 and may be run on an entity for executing of the wireless local area network data frame transmission method shown in FIG. 1. As shown in the figure, the wireless local area network data frame transmission apparatus in this embodiment of the present invention may include at least a determining module 301, an adjustment module 302, and a transmission module 303.

The determining module 301 is configured to determine a current transmission rate of a data frame as a first transmission rate.

The adjustment module 302 is configured to: when a size of the data frame is less than a preset threshold, adjust the current transmission rate of the data frame to a second transmission rate, where the second transmission rate is less than the first transmission rate.

The transmission module 303 is configured to transmit the data frame at the second transmission rate.

In an optional embodiment, the adjustment module 302 is specifically configured to:
use a transmission rate in a transmission rate set as the second transmission rate, where
each transmission rate in the transmission rate set is less than the first transmission rate. In an optional embodiment, the adjustment module 302 uses a transmission rate in the transmission rate set as the second transmission rate, and is specifically configured to:
   acquire a priority of each transmission rate in the transmission rate set; and
   use a transmission rate with a highest priority in the transmission rate set as the second transmission rate.

In an optional embodiment, the determining module 301 is specifically configured to:
search for the current transmission rate of the data frame by using an MCS; and
use the current transmission rate that is obtained by means of searching as the first transmission rate.

According to the wireless local area network data frame transmission apparatus shown in FIG. 3, the determining module 301 determines a current transmission rate of a data frame as a first transmission rate; when a size of the data frame is less than a preset threshold, the adjustment module 302 adjusts the current transmission rate of the data frame to a second transmission rate, where the second transmission rate is less than the first transmission rate; and the transmission module 303 transmits the data frame at the second transmission rate. In this way, noises existing in a voice obtained by means of decoding by a receiving party can be avoided.

Referring to FIG. 4, FIG. 4 is a schematic structural diagram of a terminal device according to another embodiment of the present invention, where the terminal device is configured to perform the wireless local area network data frame transmission method provided in the embodiments of the present invention. As shown in FIG. 4, the terminal device may include a processor 401, a memory 402, and a network interface 403. The processor 401 is connected to the memory 402 and the network interface 403. For example, the processor 401 may be connected to the memory 402 and the network interface 403 by using a bus.

The processor 401 may be a central processing unit (English: central processing unit, CPU), a network processor (English: network processor, NP), a hardware chip, or any combination thereof. The hardware chip may be an application-specific integrated circuit (English: application-specific integrated circuit, ASIC), a programmable logic device (English: programmable logic device, PLD), or a combination thereof. The PLD may be a complex programmable logic device (English: complex programmable logic device, CPLD), a field-programmable gate array (English: field-programmable gate array, FPGA), a generic array logic (English: generic array logic, GAL), or any combination thereof.

The memory 402 may be specifically configured to store a data frame, a current transmission rate of the data frame, and the like. The memory 402 may include a volatile memory (English: volatile memory), such as a random-access memory (English: random-access memory, RAM for short); or the memory 402 may include a non-volatile memory (English: non-volatile memory), such as a read-only memory (English: read-only memory, ROM for short), a flash memory (English: flash memory), a hard disk drive (English: hard disk drive, HDD for short), or a solid state drive (English: solid-state drive, SSD for short); or the memory 402 may include a combination of the memories of the foregoing types.

The network interface 403 is configured to transmit the data frame. The network interface 403 may be a radio frequency (English: radio frequency, RF) chip, such as a low-power radio frequency transceiver (such as Texas Instruments (English: Texas Instruments) CC1000PWR or a radio frequency transceiver (such as Texas Instruments CC2420RTCR) that works in a 2.4 GHz frequency band.

The processor 401 may be configured to:
determine the current transmission rate of the data frame as a first transmission rate;
when a size of the data frame is less than a preset threshold, adjust the current transmission rate of the data frame to a second transmission rate, where the second transmission rate is less than the first transmission rate; and
transmit the data frame at the second transmission rate by using the network interface 403. In specific implementation, the processor 401 may add the second transmission rate to a PLCP header, encapsulate the data frame to which the second transmission rate is added, and then send the encapsulated data frame to the network interface 403. The network interface 403 acquires the second transmission rate from the PLCP header, and transmits the encapsulated data frame at the second transmission rate.

In an optional embodiment, that the processor 401 adjusts the current transmission rate of the data frame to the second transmission rate may be specifically:
the processor 401 determines a transmission rate set, where each transmission rate in the transmission rate set is less than the first transmission rate; and
the processor 401 uses a transmission rate in the transmission rate set as the second transmission rate.

In an optional embodiment, that the processor 401 uses a transmission rate in the transmission rate set as the second transmission rate may be specifically:
the processor 401 acquires a priority of each transmission rate in the transmission rate set; and
the processor 401 uses a transmission rate with a highest priority in the transmission rate set as the second transmission rate.

In an optional embodiment, that the processor 401 determines the current transmission rate of the data frame as the first transmission rate may be specifically:
the processor 401 searches for the current transmission rate of the data frame by using an MCS; and
the processor 401 uses the current transmission rate that is obtained by means of searching as the first transmission rate.

Specifically, the terminal device described in this embodiment of the present invention may be configured to implement some or all of the procedures in the wireless local area network data frame transmission method embodiment that is described with reference to FIG. 1 in the present invention. In the description of the specification, the description of reference terms "an embodiment", "some embodiments", "an example", "a specific example", "some examples", and the like means that specific features, structures, materials, or characteristics that are described with reference to the embodiments or examples are included in at least one embodiment or example of the present invention. In the specification, the foregoing exemplary expressions of the terms are not necessarily with respect to a same embodiment or example. In addition, the described specific features, structures, materials, or characteristics may be combined in an appropriate manner in any one or more of the embodiments or examples. In addition, a person skilled in the art may integrate or combine different embodiments or examples and characteristics of different embodiments or examples described in the specification, as long as they do not conflict each other.

In addition, the terms "first" and "second" are merely intended for a purpose of description, and shall not be understood as an indication or implication of relative importance or implicit indication of a quantity of indicated technical features. Therefore, features limited by "first" or "second" may explicitly or implicitly include at least one of the features. In the description of the present invention, "multiple" indicates at least two, for example, two, three, and so on, unless otherwise specified. Logic and/or steps shown in the flowcharts or described herein in other manners, for example, may be considered as a program list of executable instructions that are used to implement logic functions, and may be specifically implemented on any computer-readable medium, for an instruction execution system, apparatus, or device (for example, a computer-based system, a system including a processor, or another system that can acquire instructions from the instruction execution system, apparatus, or device and execute the instructions) to use, or for a combination of the instruction execution system, apparatus, or device to use. In terms of the specification, the "computer-readable medium" may be any apparatus that may include, store, communicate, propagate, or transmit programs, for the instruction execution system, apparatus, or device to use, or for a combination of the instruction execution system, apparatus, or device to use. More specific examples (this list is not exhaustive) of the computer-readable medium include the following: an electrical part (an electrical apparatus) with one or more buses, a portable computer cartridge (an magnetic apparatus), a random-access memory, a read-only memory, an electrically erasable programmable read-only memory, an optical fiber apparatus, and a compact disc read-only memory. In addition, the computer-readable medium may even be a piece of paper on which the programs can be printed or another appropriate medium. Because, for example, optical scanning may be performed on the paper or the another medium, then processing, such as edition, decoding, or another appropriate means when necessary, may be performed to obtain the programs in an electronic manner, and then the programs are stored in a computer memory.

It should be understood that, parts in the present invention may be implemented by using hardware, software, firmware, or a combination thereof. In the foregoing implementation manners, multiple steps or methods may be implemented by using software or firmware that is stored in a memory and is executed by an appropriate instruction execution system. For example, if hardware is used for implementation, being similar to implementation in another implementation manner, any item or a combination of the following well-known technologies in the art may be used for implementation: a discreet logic circuit having a logic gate circuit that is used to implement a logic function for a data signal, an application-specific integrated circuit having an appropriate combinatorial logic circuit, a programmable gate array, a field programmable gate array, and the like.

In addition, the modules in the embodiments of the present invention may be implemented in a form of hardware, or may be implemented in a form of a software functional module. When the integrated module is implemented in the form of a software functional module and sold or used as an independent product, the integrated unit may be stored in a computer-readable storage medium. Although the embodiments of the present invention are shown and described above, it may be understood that, the foregoing embodiments are exemplary, and cannot be construed as a limitation to the present invention. Within the scope of the present invention, a person of ordinary skill in the art may make changes, modifications, replacements, and variations to the foregoing embodiments.

## Claims

1. A wireless local area network data frame transmission method, comprising:
determining a current transmission rate of a data frame as a first transmission rate;
when a size of the data frame is less than a preset threshold, adjusting the current transmission rate of the data frame to a second transmission rate, wherein the second transmission rate is less than the first transmission rate; and
transmitting the data frame at the second transmission rate.

2. The method according to claim 1, wherein the adjusting the current transmission rate of the data frame to a second transmission rate comprises:
using a transmission rate in a transmission rate set as the second transmission rate, wherein each transmission rate in the transmission rate set is less than the first transmission rate.

3. The method according to claim 2, wherein the using a transmission rate in a transmission rate set as the second transmission rate comprises:
acquiring a priority of each transmission rate in the transmission rate set; and
using a transmission rate with a highest priority in the transmission rate set as the second transmission rate.

4. The method according to any one of claims 1 to 3, wherein the determining a current transmission rate of a data frame as a first transmission rate comprises:
searching for the current transmission rate of the data frame by using a modulation and coding scheme, MCS; and
using the current transmission rate that is obtained by means of searching as the first transmission rate.

5. A wireless local area network data frame transmission apparatus, comprising:
a determining module, configured to determine a current transmission rate of a data frame as a first transmission rate;
an adjustment module, configured to: when a size of the data frame is less than a preset threshold, adjust the current transmission rate of the data frame to a second transmission rate, wherein the second transmission rate is less than the first transmission rate; and
a transmission module, configured to transmit the data frame at the second transmission rate.

6. The apparatus according to claim 5, wherein the adjustment module is specifically configured to:
use a transmission rate in a transmission rate set as the second transmission rate, wherein each transmission rate in the transmission rate set is less than the first transmission rate.

7. The apparatus according to claim 6, wherein the adjustment module is specifically configured to:
acquire a priority of each transmission rate in the transmission rate set; and
use a transmission rate with a highest priority in the transmission rate set as the second transmission rate.

8. The apparatus according to any one of claims 5 to 7, wherein the determining module is specifically configured to:
search for the current transmission rate of the data frame by using a modulation and coding scheme, MCS; and
use the current transmission rate that is obtained by means of searching as the first transmission rate.
